# FASCICULE DE BREVET EUROPEEN

(11) **EP 1 320 000 B1**
(45) Date de publication et mention de la délivrance du brevet: **23.05.2007**
(21) Numéro de dépôt: 01811220.1
(22) Date de dépôt: 12.12.2001
(51) Int. Cl.: G05B 19/401, G01B 3/30

(54) **Méthode de calibrage d'une machine à mesurer**
Verfahren zur Kalibrierung eines Messgerätes
Method of calibrating a measuring apparatus

(43) Date de publication de la demande: 18.06.2003
(73) Titulaire: TESA SA, 1020 Renens (CH)
(72) Inventeur: Jordil, Pascal, 1612 Ecoteaux (CH); Zufferey, Charles-Henri, 1976 Erde (CH); Zanier, Adriano, 1008 Prilly (CH)
(74) Mandataire: P&TS Patents & Technology Surveys SA

(56) Documents cités:
- GB-A- 595 190
- US-A- 4 899 094
- US-A- 5 134 781
- PATENT ABSTRACTS OF JAPAN vol. 2000, no. 05, 14 septembre 2000 (2000-09-14) -& JP 2000 039304 A (TOKYO SEIMITSU CO LTD), 8 février 2000 (2000-02-08)

## Description

La présente invention concerne une jauge de référence pour le calibrage d'une machine à mesurer. La présente invention concerne également la méthode de calibrage associée à une jauge de référence selon l'invention.

Les machines à mesurer possèdent un bras mobile dans une ou plusieurs directions dont la position est déterminée avec précision à l'aide de systèmes de mesure par exemple capacitifs, inductifs, magnétorésistifs ou optoéléctroniques. A l'extrémité du bras mobile est montée une touche généralement sphérique. Le bras de la machine à mesurer est déplacé dans l'espace selon une trajectoire déterminée jusqu'à un certain point de mesure, par exemple une surface, une arête ou un point précis d'une pièce à mesurer. Les coordonnées de ce point sont relevées, soit manuellement par l'opérateur, soit par exemple par un logiciel attaché à la machine à mesurer. Un tel logiciel permettant ensuite, par exemple, de déterminer la hauteur du point de mesure par rapport à la surface de travail ou de tout autre plan de référence, de calculer les dimensions d'un objet ou, dans certains cas, de représenter un objet à mesurer en deux ou trois dimensions à l'aide d'une série de points de mesure.

Afin de garantir la précision de la mesure, la machine à mesurer doit régulièrement être calibrée pour corriger les éventuelles erreurs provenant par exemple de la variation des conditions environnementales, du changement du diamètre de la touche, etc. Le calibrage se fait au minimum à chaque nouvelle mise en service de la machine à mesurer et avant de pouvoir effectuer des mesures.

L'outil communément utilisé pour le calibrage d'une machine à mesurer est une jauge de référence. La jauge de référence possède en général une fourche calibrée qui sert à calibrer la machine à mesurer selon un certain axe. La fourche est placée autour de la touche. Le bras de la machine à mesurer est déplacé selon un axe déterminé jusqu'à ce que la touche entre en contact avec un premier côté de la fourche, déterminant ainsi un premier point de mesure. Le bras de la machine à mesurer est ensuite déplacé dans la direction opposée jusqu'à toucher l'autre côté de la fourche, déterminant ainsi le deuxième point de mesure. Le logiciel de la machine à mesurer connaissant la dimension exacte de la fourche calibrée, son déplacement et dans certains cas la dimension exacte de la touche, il peut alors calculer les paramètres de calibrage, tels que par exemple les flexions et les hystérèses existant dans un tel système mécanique lors d'un changement de direction. La procédure de calibrage doit être répétée après chaque mise en marche de la machine à mesurer et avant de pouvoir effectuer des mesures.

Afin d'améliorer la qualité de la prise de la dimension de la fourche calibrée, il est favorable de limiter la course du bras de la machine à mesurer et par conséquent de limiter la dimension de la fourche elle-même. Une telle diminution ayant pour désavantage qu'elle empêche l'utilisation de touches de diamètre sensiblement égal ou supérieur à la dimension de la fourche calibrée. La dimension de la fourche résulte donc d'un compromis entre la précision recherchée de la mesure et la possibilité d'utiliser la jauge de référence avec un maximum de touches usuelles. Ainsi, les jauges utilisées actuellement ont toutes une dimension de référence soit de 20 millimètres, soit de 25.4 millimètres (1 inch) suivant le système de mesure adopté.

La demande de brevet JP2000039304 décrit une jauge de calibrage permettant de mesurer une distance de référence entre deux éléments parallèles séparés par une cale-étalon.

Le brevet US4899094 décrit un dispositif et un procédé de calibration d'un tour dans lequel l'on mesure le diamètre interne ou externe d'une pièce tenue par le mandrin du tour.

Le brevet GB595190 décrit une jauge de précision ajustable au moyen d'une cale à faces non-parallèles.

Le brevet US5134781 décrit une jauge la calibration de machines à mesurer avec un volume en saille à faces parallèles.

Un but de l'invention est de proposer une jauge de référence permettant un calibrage plus précis que les jauges actuelles quel que soit le diamètre de la touche de la machine à mesurer.

Ce but est atteint en proposant une jauge de référence selon la revendication 1, dont la dimension de référence peut être mesurée aussi bien par ses cotes intérieures que par ses cotes extérieures. La mesure de la dimension de référence peut se faire soit, comme décrit précédemment, en mesurant le déplacement linéaire du bras de la machine à mesurer entre deux surfaces de référence délimitant une fourche calibrée, soit en mesurant la distance entre un premier point de mesure sur une face d'une cale-étalon et un deuxième point de mesure sur la face opposée de la même cale-étalon. La dimension choisie pour la dimension de référence étant inférieure à 20 millimètres, avantageusement inférieure à 15 millimètres et de préférence inférieure à 7 millimètres.

Une jauge de référence selon l'invention présente deux avantages majeurs :
1. la dimension de référence est fortement diminuée par rapport à celle des jauges actuelles, limitant ainsi le déplacement du bras de la machine à mesurer lors du calibrage ;
2. la dimension de référence pouvant être mesurée soit sur les cotes intérieures d'une fourche calibrée, soit sur les cotes extérieures d'un volume en saillie, l'utilisation de la même jauge de référence est rendue possible pour le calibrage de machines à mesurer utilisant des touches de tout diamètre.

La présente invention sera mieux comprise à la lecture de la description donnée à titre d'exemple et illustrée par les figures annexées.

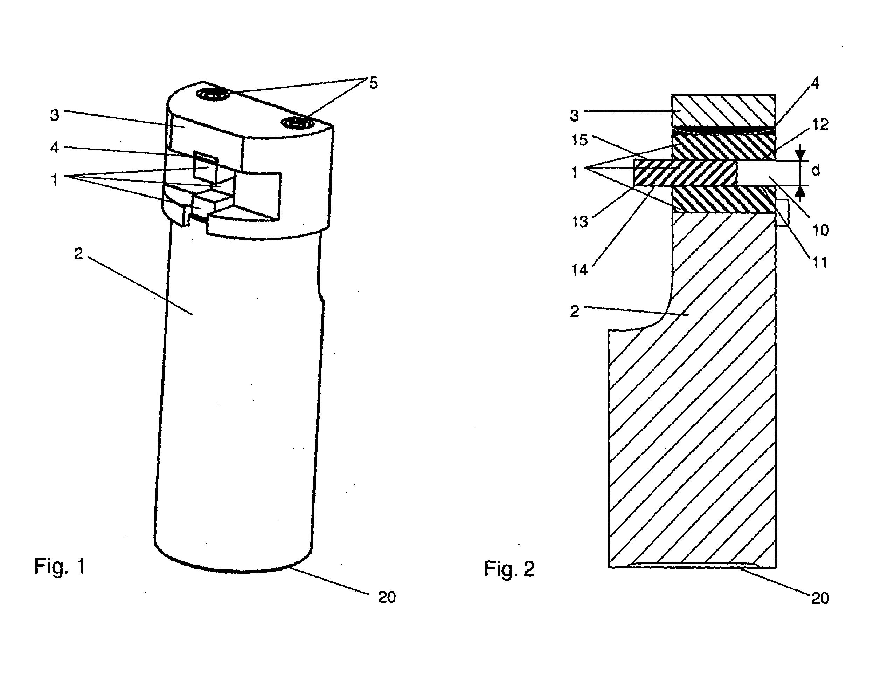

La figure 1 représente une vue en perspective d'une jauge de référence selon l'invention, adaptée au calibrage des colonnes de mesure de hauteur.

La figure 2 représente une vue en coupe de la jauge représentée à la figure 1.

La version préférentielle de la jauge de référence selon l'invention est une jauge de référence destinée au calibrage d'une colonne de mesure de hauteur. Une colonne de mesure de hauteur est une machine à mesurer mesurant des distances uniquement selon l'axe vertical. La colonne de mesure de hauteur est généralement posée sur une surface de travail parfaitement plate, permettant ainsi la mesure précise soit de la distance verticale entre deux points de mesure soit de la hauteur d'un point de mesure par rapport à cette surface de travail. La dimension de référence d'une jauge de référence destinée au calibrage d'une colonne de mesure de hauteur est par conséquent orientée dans un plan vertical par rapport à la surface de travail.

Les éléments principaux constituant une jauge de référence selon la version préférentielle de l'invention sont trois cales-étalon 1, un socle 2 et une coiffe 3.

Les cales-étalon 1 sont des pièces mécaniques de préférence parallélépipédiques, usinées dans un matériau dur et peu sensible aux variations environnementales, dont au moins une dimension est déterminée avec la plus grande précision par un usinage extrêmement précis de deux de ses faces opposées. Dans la version préférentielle de l'invention, pour des raisons de simplification et de réduction des coûts, les trois cales-étalon 1 sont identiques. La dimension de référence d choisie est égale à 6.35 millimètres (1/4 inch), dimension adaptée à des calculs dans le système métrique comme dans le système impérial. La fourche calibrée 10 est constituée par la superposition des trois cales-étalon 1, la cale-étalon du milieu étant sensiblement décalée par rapport aux deux autres. De cette manière, l'assemblage des trois cales-étalon 1 présente, à l'opposé de la fourche calibrée 10, une partie en saillie 13 de la cale-étalon du milieu, destiné au calibrage des machines à mesurer utilisant une touche dont le diamètre est trop grand pour lui permettre d'être introduite dans la fourche calibrée 10.

Le socle 2 possède une assise 20 par laquelle la jauge de référence est en contact avec la surface de travail. Le socle 2 donne à la jauge sa stabilité. Il est lourd et de grande dimension relativement à la dimension de référence d. Le socle 2 détermine la distance entre la fourche calibrée 10 ou le volume en saillie 13 et la surface de travail, cette distance devant être suffisamment grande pour permettre au bras de la colonne de mesure de mesurer la fourche calibrée sans être à l'extrémité de sa course verticale. De préférence, la hauteur du socle sera entre 5% et 20% de la hauteur de la colonne de mesure de hauteur. L'assise du socle détermine également l'orientation de la fourche calibrée 10 et du volume en saillie 13 par rapport à la surface de travail.

La coiffe 3 maintient les cales-étalons sur le socle tout en libérant une surface assez grande autour de la fourche 10 et du volume 13 calibrés pour permettre à la touche d'y accéder aisément lors du calibrage. La coiffe 3 est visée sur le socle à l'aide de deux vis 5 et un ressort 4 inséré entre la coiffe et les cales-étalon 1 assure une pression constante sur les cales-étalon 1 afin d'éviter tout dérèglement de la jauge de référence.

La version préférentielle de la jauge de référence selon l'invention fait usage de trois cales-étalon 1 superposées, celle du centre étant décalée par rapport aux autres afin de former la fourche calibrée 10 et de laisser une partie de la cale-étalon du milieu en saillie 13. Il est également possible dans une variante non représentée de cette version préférentielle, de remplacer les cales-étalon supérieure et inférieure, par exemple, par des pièces mécaniques dont seule une surface est parfaitement plane. La surface parfaitement plane de chacune de ces pièces étant en contact avec la cale-étalon du milieu, formant ainsi une fourche calibrée dont les surfaces sont parfaitement planes. Les dimensions de ces pièces doivent toutefois permettre à une partie de la cale-étalon de rester en porte-à-faux par rapport à elles. Il est également possible d'usiner avec la plus grande précision soit la surface supérieure du socle, soit la surface inférieure de la coiffe, soit les deux, afin qu'une de ces surfaces ou les deux servent de surface délimitant un côté de la fourche calibrée.

L'utilisation de la jauge de référence selon la version préférentielle de l'invention a été illustrée ci-dessus à titre d'exemple par le calibrage d'une colonne de mesure de hauteur. L'homme du métier comprendra aisément qu'une telle jauge peut également servir au calibrage selon l'axe vertical de toute machine à mesurer bi- ou tridimensionnelle.

Dans une deuxième version non représentée de la jauge de référence selon l'invention, la dimension de référence, matérialisée telle que dans la version préférentielle par une fourche calibrée et par un volume en saillie, est orientée dans un plan horizontal, permettant ainsi le calibrage d'une machine à mesurer uni- bi- ou tridimensionnelle selon tout axe situé dans un plan horizontal.

Dans une troisième variante, la jauge de référence possède au moins deux dimensions de calibrage représentées chacune à la fois par une fourche calibrée et par un volume en saillie, une des au moins deux dimensions calibrées étant orientée dans un plan vertical, une autre des au moins deux dimensions calibrées étant orientée dans un plan horizontal, permettant ainsi à l'aide de la même jauge de référence de calibrer une machine à mesurer bi- ou tridimensionnelle selon l'axe vertical et selon au moins un axe horizontal.

La méthode de calibrage d'une machine à mesurer liée à l'utilisation d'une jauge de référence selon l'invention possède deux variantes.

Dans le cas où le diamètre de la touche de la machine à mesurer est sensiblement inférieur à la dimension calibrée d, les deux surfaces 11 et 12 délimitant la fourche calibrée sont positionnées de part et d'autre de la touche selon l'axe dans lequel la machine à mesurer doit être calibrée. Le bras de la machine à mesurer est ensuite déplacé le long de cet axe, jusqu'à ce que la touche entre en contact avec une première surface 11 ou 12, déterminant ainsi un premier point de mesure. Le bras de la machine à mesurer est ensuite déplacé dans la direction opposée selon le même axe jusqu'à entrer en contact avec l'autre surface 12 ou 11 délimitant la fourche calibrée, déterminant ainsi le deuxième point de mesure. Les paramètres de calibrage sont ensuite calculés à l'aide de la dimension calibrée d connue, de la mesure du déplacement du bras de la machine à mesurer et, s'il est connu précisément, du diamètre de la touche.

Dans le cas où le diamètre de la touche de la machine à mesurer est sensiblement égal ou supérieur à la dimension calibrée d, le volume en saillie est posé à proximité de la touche dans une position précisément déterminée, ses faces 14 ou 15 étant orientées dans un plan perpendiculaire à l'axe dans lequel la machine à mesurer doit être calibrée. Le bras de la machine à mesurer est ensuite déplacé le long de cet axe, jusqu'à ce que la touche entre en contact avec une première face 14 ou 15, déterminant ainsi un premier point de mesure. Le bras de la machine à mesurer est ensuite légèrement déplacé dans la direction opposée afin de permettre le retrait de la jauge de référence, puis à nouveau dans la direction initiale sur une distance sensiblement supérieure à d. La jauge est replacée précisément dans sa position initiale. Le bras de la machine à mesurer est alors déplacé dans la direction opposée selon le même axe jusqu'à entrer en contact avec l'autre surface 15 ou 14 délimitant le volume en saillie, déterminant ainsi le deuxième point de mesure. Les paramètres de calibrage sont ensuite calculés à l'aide de la dimension calibrée d connue, de la distance mesurée entre les deux points de mesure et, s'il est connu précisément, du diamètre de la touche.

## Revendications

1. Méthode de calibrage, d'une machine à mesurer avec une touche mobile, la méthode comprenant les étapes de :
disposer dans le volume de mesure de la machine à mesurer une jauge de référence dans laquelle une dimension de référence (d) est mesurable aussi bien par la mesure de la distance calibrée entre les faces internes (11, 12) d'une fourche calibrée (10) de la jauge que par la mesure de la distance calibrée entre les faces externes (14, 15) d'un volume en saillie(13) de la jauge, une surface assez grande étant libérée autour de la fourche (10) et du volume en saille (13) pour permettre à la touche mobile d'accéder, lors du calibrage, auxdites faces internes (11, 12) de ladite fourche calibrée et auxdites faces externes (14, 15) dudit volume en saille;
dans le cas où le diamètre de la touche de la machine à mesurer est inférieur à la dimension de référence (d): déplacer la touche de la machine jusqu'à toucher une première surface interne (11 ou 12) de la fourche calibrée, et ensuite l'autre surface interne (12 ou 11) de la fourche calibrée ;
dans le cas où le diamètre de la touche de la machine à mesurer est égal ou supérieur à la dimension de référence (d): déplacer la touche de la machine jusqu'à toucher une première surface externe (14 ou 15) du volume en saille et ensuite l'autre surface externe (15 ou 14) du volume en saille.

2. Méthode selon la revendication précédente, ladite au moins une dimension de référence (d) étant inférieure à 15 millimètres.

3. Méthode selon une des revendications précédentes, ladite au moins une dimension de référence (d) étant déterminée par une cale-étalon (1) de la jauge de référence.

4. Méthode selon une des revendications précédentes, ladite fourche calibrée (10) et ledit volume en saillie (13) étant formés par le montage d'une cale-étalon (1) entre deux surfaces planes.

5. Méthode selon une des revendications précédentes, ladite fourche calibrée (10) et ledit volume en saillie (13) étant formés par superposition de trois cales-étalon (1).

## Claims

1. Method for calibrating a measuring machine with a mobile probe, the method including the steps of:
placing in the machine's measuring volume a reference gauge in which one reference dimension (d) can be measured either by measuring the calibrated distance between the inner surfaces (11, 12) of a calibrated fork (10) of the gauge or by measuring the calibrated distance between the outer surfaces (14, 15) of a protruding volume (13) of the gauge, a sufficiently great surface being freed around the fork (10) and of the protruding volume (13) to allow the mobile probe to access, during calibration, said inner surfaces (11, 12) of said calibrated fork and said outer surfaces (14, 15) of said protruding volume (13);
in case the diameter of the measuring machine's probe is less than the reference dimension (d): move the machine's probe until touching a first inner surface (11 or 12) of the calibrated fork and then the other inner surface (12 or 11) of the calibrated fork;
in case the diameter of the measuring machine's probe is equal to or greater than the reference dimension (d): move the machine's probe until touching a first outer surface (14 or 15) of the protruding volume and then the other outer surface (15 or 14) of protruding volume.

2. Method according to the preceding claim, said at least one reference dimension (d) being less than 15 millimeters.

3. Method according to one of the preceding claims, said at least one reference dimension (d) being determined by a gauge block (1), reference gauge.

4. Method according to one of the preceding claims, said calibrated fork (10) and said protruding volume (13) being formed by mounting a gauge block (1) between two plane surfaces.

5. Method according to one of the preceding claims, said calibrated fork (10) and said protruding volume (13) being formed by superposing three gauge blocks (1).

## Patentansprüche

1. Verfahren zur Kalibrierung eines Messgerätes mit einem mobilen Taster, wobei das Verfahren die folgenden Schritte umfasst:
ein Referenzkaliber in das Messvolumen des Geräts einfügen, worin eine Referenzdimension (d) sowohl durch das Messen des Abstands zwischen den Innenseiten (11, 12) einer kalibrierten Gabel (10) des Kalibers wie auch durch das Messen des kalibrierten Abstands zwischen den Aussenseiten (14, 15) eines herausragenden Volumens (13) des Kalibers messbar ist, wobei eine genügend grosse Fläche um die Gabel (10) und um das herausragende Volumen (13) frei gestellt wird, um dem mobilen Taster während dem Kalibrieren den Zugang zu den Innenseiten (11, 12) der besagten kalibrierten Gabel und zu den Aussenseiten (14, 15) des herausragenden Volumens zu ermöglichen;
falls der Durchmesser des Tasters des Messgeräts weniger als die Referenzdimension (d) ist: den Taster des Geräts verschieben, bis er eine erste Innenseite (11 oder 12) der kalibrierten Gabel und dann die andere Innenseite (12 oder 11) der kalibrierten Gabel berührt;
falls der Durchmesser des Tasters des Messgeräts gleich wie oder grösser als die Referenzdimension (d) ist: den Taster des Geräts verschieben, bis er eine erste Aussenseite (14 oder 15) des herausragenden Volumens und dann die andere Aussenseite (15 oder 14) des herausragenden Volumens berührt.

2. Verfahren gemäss dem vorhergehenden Anspruch, wobei die besagte mindestens eine Referenzdimension (d) weniger als 15 Millimeter beträgt.

3. Verfahren gemäss einem der vorhergehenden Ansprüche, wobei die besagte mindestens eine Referenzdimension (d) durch ein Endmass (1) des Referenzkalibers bestimmt wird.

4. Verfahren gemäss einem der vorhergehenden Ansprüche, wobei die besagte kalibrierte Gabel (10) und das besagte herausragende Volumen (13) durch das Montieren eines Endmasses (1) zwischen zwei ebenen Flächen gebildet werden.

5. Verfahren gemäss einem der vorhergehenden Ansprüche, wobei die besagte kalibrierte Gabel (10) und das besagte herausragende Volumen (13) durch Überlagerung von drei Endmassen (1) gebildet werden.
